Europäisches Patentamt

European Patent Office

Office européen des brevets

(19)

(11) Numéro de publication: **0 394 594**
**A1**

(12) **DEMANDE DE BREVET EUROPEEN**

(21) Numéro de dépôt: **89440027.4**

(22) Date de dépôt: **10.04.89**

(51) Int. Cl.⁵: **A01G 5/00**

(30) Priorité: **30.03.89 FR 8904389**

(43) Date de publication de la demande:
**31.10.90 Bulletin 90/44**

(84) Etats contractants désignés:
**AT BE CH DE ES GB GR IT LI LU NL SE**

(71) Demandeur: **Heumann, Guy**
**25, rue Auguste Prost**
**F-57000 Metz(FR)**

Demandeur: **Lang, Jean-Louis**
**56, rue Robert Schumann**
**F-57050 Longeville-les-Metz(FR)**

Demandeur: **Kreicher, Roger**
**48, rue des Mélèzes**
**F-57070 Saint Julien-les-Metz(FR)**

(72) Inventeur: **Heumann, Guy**
**25, rue Auguste Prost**
**F-57000 Metz(FR)**

(74) Mandataire: **Nuss, Pierre et al**
**10, rue Jacques Kablé**
**F-67000 Strasbourg(FR)**

(54) **Dispositif pour l'effeuillage des tiges de plantes coupées.**

(57) La présente invention a pour objet un dispositif pour l'effeuillage des tiges de plantes coupées, telles que des fleurs, permettant l'élimination de toutes excroissances, par exemple d'épines, de feuilles ou autres, sur toute ou partie de ladite tige.

Dispositif caractérisé en ce qu'il est principalement constitué par deux demi-cylindres creux (2 et 2'), articulés entre eux, munis, chacun, sur leur face interne, d'un élément (3 ou 3') disposé sensiblement transversalement par rapport auxdits demi-cylindres creux (2 et 2') et pourvu d'un évidement (4 ou 4'), chaque élément (3 ou 3') étant disposé de telle manière que, lors du rapprochement des deux demi-cylindres creux (2 et 2') entre eux autour de l'axe de leur articulation (5), ils se chevauchent partiellement, les deux évidements (4 et 4') superposés formant alors un orifice de passage, à l'intérieur duquel sera coincée la tige à effeuiller, un moyen élastique (6) maintenant, en outre, les deux demi-cylindres creux (2 et 2') en position écartée au repos.

Fig. 3

## Dispositif pour l'effeuillage des tiges de plantes coupées

La présente invention concerne le domaine de l'horticulture, et en particulier un dispositif pour l'effeuillage des tiges de plantes coupées, telles que des fleurs, permettant l'élimination de toutes excroissances, par exemple d'épines, de feuilles ou autres, sur toute ou partie de ladite tige.

On sait que les feuilles et les épines des plantes coupées, présentées par exemple dans des vases, pourrissent rapidement, du fait de leur immersion et empoisonnent ainsi l'eau, ce qui accélère le processus de dépérissement de ces plantes. De plus, les feuilles et épines sont inintéressantes esthétiquement et décorativement, car cachées à l'intérieur des vases ; en outre, elles limitent fortement, du fait du volume qu'elles occupent, le nombre de plantes que l'on peut disposer par vase.

On a alors mis au point différents types d'appareils, aussi bien manuels que motorisés, qui sollicitent plus ou moins l'utilisateur.

Pour ce qui est des dispositifs motorisés, ils comportent en général deux rouleaux-brosses métalliques, entraînés par l'intermédiaire d'un moteur électrique, la partie de la tige à nettoyer étant introduite entre ces deux rouleaux, et le mouvement de rotation desdits rouleaux arrachant, par l'intermédiaire de leurs poils, les feuilles ou excroissances de la tige. Mais de tels appareils présentent notamment les inconvénients d'être très onéreux compte tenu de la simplicité de la manipulation à effectuer et, d'autre part, inadaptés à des fleurs présentant des tiges délicates et donc facilement cassables. De plus, ils ne permettent pas de limiter précisément la zone de la tige à dégager.

Pour ce qui est des dispositifs manuels d'effeuillage, ils se présentent notamment sous forme de ciseaux dont les lames sont pourvues de différents évidements, ou encore sous forme de petits couteaux munis d'une pince. Mais la manipulation de ces dispositifs est fatigante pour l'utilisateur, notamment au niveau du poignet, lors d'un nombre répété d'opérations, surtout lorsque la tige présente beaucoup d'excroissances, car l'utilisateur exerce sa pression au niveau du manche du dispositif et non pas directement sur la lame. De plus, leur utilisation donne lieu à des projections intempestives de matières arrachées, et peut se révéler dangereuse pour le manipulateur.

La présente invention a pour but de pallier les inconvénients présentés par ces différents types de dispositifs d'effeuillage connus.

Elle a, en effet, pour objet un dispositif pour l'effeuillage des tiges de plantes coupées, telles que des fleurs, permettant l'élimination de toutes excroissances, par exemple d'épines, de feuilles ou autres, sur toute ou partie de ladite tige, caractérisé en ce qu'il est principalement constitué par deux demi-cylindres creux, articulés entre eux, munis, chacun, sur leur face interne, d'un élément disposé sensiblement transversalement par rapport auxdits demi-cylindres creux et pourvu d'un évidement, chaque élément étant disposé de telle manière que, lors du rapprochement des deux demi-cylindres creux entre eux autour de l'axe de leur articulation, ils se chevauchent partiellement, les deux évidements superposés formant alors un orifice de passage, à l'intérieur duquel sera coincée la tige à effeuiller, un moyen élastique maintenant, en outre, les deux demi-cylindres creux en position écartée au repos.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue de droite d'un dispositif d'effeuillage conforme à l'invention, en position fermée et verrouillée,

la figure 2 est une vue de dessus du dispositif conforme à l'invention, représenté à la figure 1,

la figure 3 est une vue de face du dispositif conforme à l'invention, en position ouverte, et,

la figure 4 est une vue de dessus du dispositif conforme à l'invention, représenté à la figure 3.

Conformément à l'invention, le dispositif pour l'effeuillage des tiges de plantes coupées est caractérisé en ce qu'il est principalement constitué par deux demi-cylindres creux 2 et 2', articulés entre eux, munis, chacun, sur leur face interne, d'un élément 3 ou 3' disposé sensiblement transversalement par rapport auxdits demi-cylindres creux 2 et 2' et pourvu d'un évidement 4 ou 4', chaque élément 3 ou 3' étant disposé de telle manière que, lors du rapprochement des deux demi-cylindres creux 2 et 2' entre eux autour de l'axe de leur articulation 5, ils se chevauchent partiellement, les deux évidements 4 et 4' superposés formant alors un orifice de passage 1, à l'intérieur duquel sera coincée la tige à effeuiller, un moyen élastique 6 maintenant, en outre, les deux demi-cylindres creux 2 et 2' en position écartée au repos.

Selon l'invention, le dispositif pour l'effeuillage des tiges de plantes coupées est donc principalement constitué par deux demi-cylindres creux 2 et 2', qui forment le corps du dispositif, et qui sont à la fois éléments structurels reliant tous les autres éléments du dispositif, éléments de préhension pour l'utilisateur, et enfin, éléments de cloisonnement et de protection, séparant l'intérieur du cylindre creux, formé par le rapprochement des deux demi-cylindres creux 2 et 2', de l'extérieur, c'est-à-dire de la main de l'utilisateur.

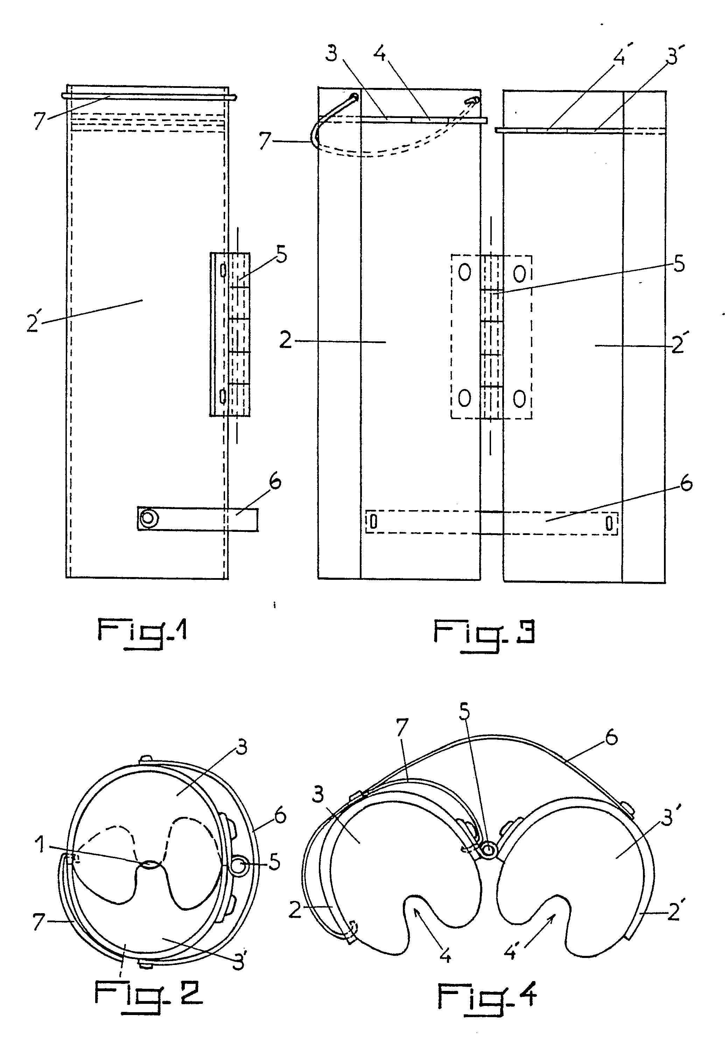

Selon une première variante de l'invention (figures 2 et 4), les deux demi-cylindres creux 2 et 2' peuvent avantageusement présenter une section semi-elliptique de manière à former lors de leur rapprochement maximum un cylindre creux de section elliptique, favorisant ainsi une meilleure préhension du dispositif.

Selon une seconde variante de l'invention, non représentée aux dessins annexés, chaque demi-cylindre creux 2 et 2' est formé par plusieurs surfaces planes juxtaposées entre elles, de telle manière que, lors de leur rapprochement maximum, les deux demi-cylindres creux 2 et 2' forment un cylindre creux de section polygonale, de préférence hexagonale.

Afin d'augmenter encore la préhension, on peut également revêtir les faces externes des deux demi-cylindres creux 2 et 2' d'une couche de peinture rugueuse au toucher, ou encore d'un revêtement, en caoutchouc par exemple, anti-dérapant, ou de tout autre revêtement assurant une préhension plus sûre et plus ferme empêchant, lors de l'utilisation du dispositif, que celui-ci ne glisse de la main du manipulateur.

Comme le montrent les figures 3 et 4 des dessins annexés, les éléments 3 et 3' sont disposés sensiblement transversalement sur les faces internes des deux demi-cylindres creux 2 et 2', et réalisés préférentiellement sous forme de plaquettes. Ils réalisent directement l'opération d'effeuillage en étant en contact avec la tige. En effet, grâce à leurs évidements 4 et 4' disposés sur les surfaces des plaquettes 3 et 3' non en contact avec les demi-cylindres creux 2 et 2' correspondant, lesdites plaquettes 3 et 3' coincent la tige à effeuiller dans un orifice 1 exactement adapté au diamètre de la tige. Il suffira alors d'un mouvement de translation brusque de l'appareil dans le sens de la tige, mouvement réalisé manuellement par l'utilisateur, pour que toutes les excroissances de la tige soient arrachées.

Conformément aux figures 3 et 4, ces plaquettes 3 et 3' peuvent avantageusement présenter une forme de "croissants" ou de "demi-lunes" aux corps larges et aux extrémités arrondies : leurs superficies étant légè rement supérieures aux superficies des sections des demi-cylindres creux 2 et 2'. Les évidements 4 et 4', en forme de U, sont alors formés par les faces internes des "croissants" ou "demi-lunes", et les faces externes ont le même rayon de courbure que les deux demi-cylindres creux 2 et 2', de manière à entrer en contact avec ceux-ci sur toute la longueur de leur demi-circonférence interne. Les plaquettes 3 et 3' pourront être fixées de manière avantageuse aux demi-cylindres creux 2 et 2' soit par soudage, soit par encastrage à l'aide de languettes, soit par emboutissage sur une des extrémités desdits demi-cylindres creux 2 et 2'. Elles pourront également être constituées par l'une des extrémités de chacun des deux demi-cylindres creux 2 et 2', pliée à angle droit du côté concave du demi-cylindre 2 ou 2'. En superposant les deux plaquettes 3 et 3', leurs faces internes tournées l'une vers l'autre, on obtient donc un orifice 1, de taille variable selon le rapprochement ou l'éloignement des deux plaquettes 3 et 3', et ce, aussi longtemps que leurs extrémités se chevauchent.

Selon une caractéristique supplémentaire de l'invention, représentée figures 1 et 2 des dessins annexés, l'articulation 5, entre les deux demi-cylindres creux 2 et 2' se présente avantageusement sous forme de liaison pivot, réalisée à l'aide d'au moins une charnière fixée de façon inamovible à chacun des deux demi-cylindres creux 2 et 2', soit par rivetage, soit par soudage, soit par collage ou encore par boulonnage. Elle solidarise ainsi les deux parties du dispositif et les guide lors de leur rapprochement de telle manière que, rapprochées à fond, elles forment un cylindre creux obturé, à l'exception d'un orifice 1 central, au niveau des plaquettes 3 et 3', qui se chevauchent alors au maximum.

Selon une autre caractéristique de l'invention, le moyen élastique 6, reliant les deux demi-cylindres creux 2 et 2', se présente préférentiellement sous la forme d'un ressort à au moins une lame ou à spirales, travaillant soit en compression, soit en extension s'il s'agit d'un ressort à spirales, soit en flexion s'il s'agit d'un ressort à au moins une lame, et suivant que lesdits ressorts sont fixés sur les parois internes ou externes des deux demi-cylindres creux 2 et 2'. Comme pour la charnière 5, on peut recourir à différents modes de fixation : soudage, rivetage, boulonnage, ou encore accrochage à l'aide de crochets.

Selon une variante de l'invention, non représentée, l'articulation 5 et la liaison élastique 6 peuvent être réalisées par un unique élément du type charnière à ressort ou encore charnière à axe travaillant en torsion.

Conformément à une autre caractéristique de l'invention, le dispositif comporte un système de verrouillage 7 de maintien en position fermée, c'est-à-dire lorsque les deux demi-cylindres creux sont dans leur position de rapprochement maximum. Le dispositif conforme à l'invention peut, pour se faire, comporter une anse 7, sous forme d'un fil métallique rigide, fixé par ses deux extrémités au bord supérieur d'un demi-cylindre creux 2 ou 2', et d'une longueur telle qu'il permet, en le rabattant, d'enserrer l'autre demi-cylindre creux 2 ou 2' lorsque ceux-ci sont complètement rapprochés. D'autres systèmes de verrouillage sont, bien entendu, possibles, tels que crochets, boutons à pression, ou autres.

Selon une autre caractéristique de l'invention, le dispositif peut comporter un moyen de sectionnement, non représenté aux dessins annexés, réalisé avantageusement sous la forme d'une autre plaquette, disposée également sensiblement transversalement sur chaque demi-cylindre 2 et 2', mais ne possédant pas d'évidement. Ainsi, lors du rapprochement des deux demi-cylindres creux 2 et 2', ces deux plaquettes se chevauchent légèrement et sectionnent la tige qui se trouve entre elles. Elles pourront, pour se faire, être légèrement taillées en biseau.

Selon un mode de réalisation préféré de l'invention, les deux demi-cylindres creux 2 et 2' présentent une hauteur comprise entre 110 mm et 130 mm, de préférence 120 mm, et des sections semi-elliptiques telles que, en position de rapprochement maximum, ils forment un cylindre creux de section elliptique, de grand diamètre compris entre 40 mm et 50 mm, de préférence 45 mm, et de petit diamètre compris entre 35 mm et 40 mm, de préférence 38 mm. L'évidement 4 ou 4' peut être, avantageusement, en forme de U. Les demi-cylindres creux 2 et 2' et les plaquettes 3 et 3' sont, de préférence, en tôle galvanisée d'épaisseur comprise entre 0,8 mm et 1,2 mm, de préférence 1,0 mm.

Le dispositif selon l'invention permet donc un effeuillage des tiges de plantes coupées, de manière efficace et sûre, et avec un minimum d'effort de la part de l'utilisateur.

L'opération d'effeuillage se déroule normalement de la manière décrite ci-après.

L'utilisateur saisit le dispositif dans une main et le déverrouille, les deux parties s'écartant complètement sous l'action du ressort 6. Puis il prend la plante à effeuiller dans l'autre main et place sa tige dans l'un des deux évidements 4 ou 4', de telle manière que le bord supérieur de la partie de la tige à effeuiller se trouve à la hauteur des plaquettes 3 ou 3'. L'utilisateur rapproche alors, en exerçant une pression avec la main, les deux demi-cylindres 2 et 2' l'un vers l'autre autour de la charnière 5, jusqu'à ce que les deux plaquettes 3 et 3' butent contre la tige et la coincent solidement dans l'orifice 1 formé par les deux évidements 4 et 4', sans toutefois l'endommager. L'utilisateur tire alors, d'un mouvement brusque de translation, le dispositif vers l'extrémité basse de la tige, tout en maintenant une pression égale sur les deux demi-cylindres creux 2 et 2', arrachant ainsi toutes protubérances, par exemple épines et feuilles, de ladite partie de la tige. On constate, par conséquent, que l'opération d'effeuillage se déroule de manière extrêmement rapide, sans aucune projection intempestive sur l'utilisateur, l'opération d'effeuillage elle-même se déroulant dans un volume cloisonné. De plus, une fois la tige dégagée, il suffit à l'utilisateur de relâcher sa pression, afin que les deux parties du dispositif s'écartent et se vident du restant de débris végétaux : il n'y a donc aucun bourrage possible du dispositif. On pourra également, si cela est souhaité, sectionner facilement une partie de la tige à l'aide des deux plaquettes du moyen de sectionnement. En outre, le dispositif conforme à l'invention, peut être nettoyé aisément, par exemple, par simple rinçage à l'eau. On remarque également que le dispositif selon l'invention ne présente aucun angle vif, ni arrête aigüe, qui serait susceptible de blesser l'utilisateur lors de l'effeuillage ou lors du nettoyage. Il convient d'ailleurs aussi bien aux droitiers qu'aux gauchers, étant strictement symétrique dans sa constitution.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif pour l'effeuillage des tiges de plantes coupées, telles que des fleurs, permettant l'élimination de toutes excroissances, par exemple d'épines, de feuilles ou autres, sur toute ou partie de ladite tige, caractérisé en ce qu'il est principalement constitué par deux demi-cylindres creux (2 et 2'), articulés entre eux, munis, chacun, sur leur face interne, d'un élément (3 ou 3') disposé sensiblement transversalement par rapport auxdits demi-cylindres creux (2 et 2') et pourvu d'un évidement (4 ou 4'), chaque élément (3 ou 3') étant disposé de telle manière que, lors du rapprochement des deux demi-cylindres creux (2 et 2') entre eux autour de l'axe de l'articulation (5), ils se chevauchent partiellement, les deux évidements (4 et 4') superposés formant alors un orifice de passage, à l'intérieur duquel sera coincée la tige à effeuiller, un moyen élastique (6) maintenant, en outre, les deux demi-cylindres creux (2 et 2') en position écartée au repos.

2. Dispositif selon la revendication 1, caractérisé en ce que chaque demi-cylindre creux (2 et 2') présente une section semi-elliptique, de manière à former, lors de leur rapprochement maximum, un cylindre creux de section elliptique.

3. Dispositif selon la revendication 1, caractérisé en ce que chaque demi-cylindre creux (2 et 2') est formé par plusieurs surfaces planes juxtaposées entre elles, de telle manière que, lors de leur rapprochement maximum, les deux demi-cylindres creux (2 et 2') forment un cylindre creux de section polygonale, de préférence hexagonale.

4. Dispositif selon l'une quelconque des revendications 1 à 3, caractérisé en ce que les éléments transversaux (3 et 3') sont avantageusement sous la forme de plaquettes recouvrant au moins la moitié de la section du cylindre creux, les évidements (4 et 4') étant disposés sur les surfaces non en contact avec les demi-cylindres creux (2 et 2') correspondant.

5. Dispositif selon la revendication 4, caractérisé en ce que les évidements (4 et 4') des plaquettes (3 et 3') présentent un contour en U, formant ainsi, lors du rapprochement des deux demi-cylindres creux (2 et 2') et du chevauchement des deux plaquettes (3 et 3'), un orifice de passage (1) de taille variable en fonction du rapprochement des deux demi-cylindres creux (2 et 2') entre eux.

6. Dispositif selon l'une quelconque des revendications 1 à 5, caractérisé en ce que l'articulation (5) entre les deux demi-cylindres creux (2 et 2') est réalisée au moyen d'au moins une charnière.

7. Dispositif selon l'une quelconque des revendications 1 à 6, caractérisé en ce que le moyen élastique (6), maintenant les deux demi-cylindres creux (2 et 2') en position écartée au repos, se présente avantageusement sous la forme d'un ressort à au moins une lame disposé soit sur les faces internes, soit sur les faces externes des deux demi-cylindres creux (2 et 2').

8. Dispositif selon l'une quelconque des revendications 1 à 7, caractérisé en ce qu'il comporte un système de verrouillage (7), permettant de maintenir le dispositif fermé, lorsqu'il n'est pas utilisé, c'est-à-dire en position de rapprochement maximum des deux demi-cylindres creux (2 et 2').

9. Dispositif suivant la revendication 8, caractérisé en ce que le système de verrouillage (7) peut être avantageusement réalisé sous la forme d'une anse rabattable, fixée à l'un des deux demi-cylindres creux (2 ou 2') et susceptible d'enserrer, lors du rapprochement maximum des deux demi-cylindres creux (2 et 2') entre eux, l'autre demi-cylindre creux (2' ou 2).

10. Dispositif suivant l'une quelconque des revendications 1 à 9, caractérisé en ce qu'il comporte un moyen de sectionnement de la tige à effeuiller.

11. Dispositif selon l'une quelconque des revendications 1 à 10, caractérisé en ce qu'il est avantageusement réalisé en tôle galvanisée présentant, le cas échéant, une surface externe des deux demi-cylindres creux (2 et 2') rugueuse.

Fig.1

Fig.3

Fig.2

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-874690 (JEIFETZ) <br> * page 2, lignes 31 - 99; figures 1-5 * <br> --- | 1, 6 | A01G5/00 |
| A | US-A-4550656 (KIRK) <br> * colonne 1, ligne 62 - colonne 2, ligne 26; figure 1 * <br> --- | 1 | |
| A | DE-C-892086 (SCHMIDTHÄUSLER) <br> * le document en entier * <br> --- | 1 | |
| A | FR-A-2195391 (VIALENS) <br> * page 1, ligne 1 - page 2, ligne 12; figures 1-4 * <br> --- | 1 | |
| A | US-A-2681504 (SOL FOX) <br> * le document en entier * <br> --- | 1 | |
| E | EP-A-332730 (GROSSI) <br> * le document en entier * <br> ----- | 1, 4-6 | |

| DOMAINES TECHNIQUES RECHERCHES (Int. Cl.5 ) |
|---|
| A01G <br> A01D <br> A47J |

Le présent rapport a été établi pour toutes les revendications

| Lieu de la recherche | Date d'achèvement de la recherche | Examinateur |
|---|---|---|
| LA HAYE | 21 JUIN 1990 | HERYGERS J.J. |